# EUROPEAN PATENT APPLICATION

(11) **EP 1 047 050 A1**
(43) Date of publication of application: **25.10.2000**
(21) Application number: 00401141.7
(22) Date of filing: 25.04.2000
(51) Int. Cl.: G11B 7/007, G11B 7/26, G11B 20/00, G11B 23/28

(54) **Method of preventing illegal use of optical disk, optical disk based on the same method, and method of producing the optical disk**

(30) Priority: 23.04.1999 JP 11668799
(71) Applicant: Kabushiki Kaisha Optrom, Miyagi-ken 989-3124 (JP)
(72) Inventor: Saito, Tetsuo, c/o Kabushiki Kaisha Optrom, Sendai-shi, Miyagi-ken 989-3124 (JP); Hasuda, Kazutaka, c/o Pleasureland, Tokyo (JP)
(74) Representative: Rinuy, Santarelli

(57) **Abstract**

A method is provided for protecting an optical disk from illegal use, which can be practiced in a simple manner without requiring modifications of the hardware construction of a drive on which the optical disk is set or modifications of a software program of a computer system connected to the drive. An optical disk realized using this illegal use protection method and the method of producing such an optical disk are described. The optical disk includes a non-signal area remaining in a selected information recording area. The non-signal area in the selected information recording area is formed of a non-signal plane along an information recording track over at least a length long enough to makes it impossible for an optical pickup to trace the information recording track.

## Description

### BACKGROUND OF THE INVENTION

### Field of the Invention

The present invention relates to a method of preventing illegal use of an optical disk, an optical disk based on that method, and a method of producing such an optical disk.

### Description of the Related Art

Various techniques are known for protecting optical disks from illegal use, in particular from illegal copying. One technique is to record key information or encrypted information in a data recording area of an optical disk so that the optical disk can be used only when a user inputs correct information corresponding to the key information or encrypted information. Another technique is to provide an encrypted-data area on an inner or outer side of an information recording area such that the encrypted data area has a bit width different from that of the information recorded area. In the case of CLV type optical disks, a CAV area is formed for the purpose of illegal use protection. A technique of forming a pre-pit zone at a location deviated from the center of a track is also known.

However, in these conventional illegal use protection techniques, it is assumed that the hardware construction of a drive on which an optical disk is set and/or a software program of a computer system connected to the drive are modified such that they meet the requirement of a technique employed. It a device does not meet the requirement, the protection technique does not work, or conversely, an optical disk is not used even in a normal manner on such a drive. Thus, the conventional techniques are limited in effectiveness, and there is a need for a more effective technique.

### SUMMARY OF THE INVENTION

In view of the above, it is an object of the present invention to provide a method of protecting an optical disk from illegal use, which can be practiced in a simple manner without requiring a modification of the hardware construction of the drive on which the optical disk is set or the modification of the software program of the computer system connected to the drive. It is another object of the present invention to provide an optical disk realized using this illegal use protection method. It is still another object of the present invention to provide a method of producing such an optical disk.

According to an aspect of the present invention, to achieve the above objectives, there is provided an optical disk including a non-signal area remaining without being processed in a selected information recording area. In this optical disk, the selected information recording area is registered as a dummy recording area which is not used. Preferably, the non-signal area includes a non-signal plane along an information recording track over at least a length long enough to makes it impossible for an optical pickup to trace the information recording track.

According to another aspect of the present invention, there is provided a method of producing an optical disk comprising the steps of: when information is recorded on the optical disk selecting, at least one information recording area; and leaving a non-signal area without being processed in the selected information recording area. Herein, the selected information recording area is registered as a dummy recording area which is not used. Preferably, the non-signal area includes a non-signal plane along an information recording track over at least a length long enough to makes it impossible for an optical pickup to trace the information recording track. In this method of producing an optical disk, the optical disk may be of a read-only type, and the method may comprise the steps of: producing data to be written in which at least one non-signal area is selected and the non-signal area is registered as a dummy recording area which is not used; and maintaining exposure in an on-state or off-state over the entire period corresponding to said at least one non-signal area selected, in a process of producing a mother stamper. In this method of producing an optical disk, the optical disk may be of a write-once type or rewritable type, and the method may comprise the step of writing a directory such that at least one non-signal area is selected and the non-signal area is registered as a dummy recording area which is not used.

According to still another aspect of the present invention, there is provided an apparatus for producing a mother stamper used to produce an optical disk including at least one non-signal area in an information recording area, the apparatus comprising: location inputting means for inputting the location of the at least one non-signal area in the information recording area; exposure means for turning on and off exposure; and exposure control means for controlling the exposure means such that exposure is maintained in an off-state over a period corresponding to the at least one non-signal area.

According to still another aspect of the present invention, there is provided a method of protecting an optical disk from illegal use, comprising the steps of: leaving a non-signal area without being processed in a selected information recording area on the optical disk; and when an optical disk drive reads the non-signal area in the selected information recording area, making the optical disk drive come into a non-ready state. In this method, the selected information recording area is registered as a dummy recording area which is not used, and the non-signal area in the selected information recording area is not read in a normal operation. Information on the location of the selected information recording area is disclosed only to an authorized user of the optical disk, and the selected information recording area is skipped when the authorized user uses the optical disk.

### BRIEF DESCRIPTION OF THE DRAWINGS

Fig. 1 is a schematic diagram illustrating an embodiment of an optical disk processed for illegal use protection according to the present invention; and
Fig. 2 is a schematic diagram illustrating the construction of a mother stamper production apparatus for performing an illegal use protection process according to the present invention.

### DESCRIPTION OF THE PREFERRED EMBODIMENTS

### Concept of the Illegal Use Protection Technique

When information is recorded on an optical disk such as a read-only optical disk or a recordable optical disk, the information is generally recorded in a continuous fashion. It is known, in the art, to protect an optical disk from illegal use by recording special additional information in a part of an information recording area of the optical disk or by modifying a part of a signal in a special fashion.

In the present embodiment, there is provided an optical disk characterized in that a pit signal or a continuous groove signal used for tracking is removed from a part of the inside of a file or from a part between files thereby forming a discontinuous non-signal area. Example of the Construction of the Optical Disk According to the Present Embodiment

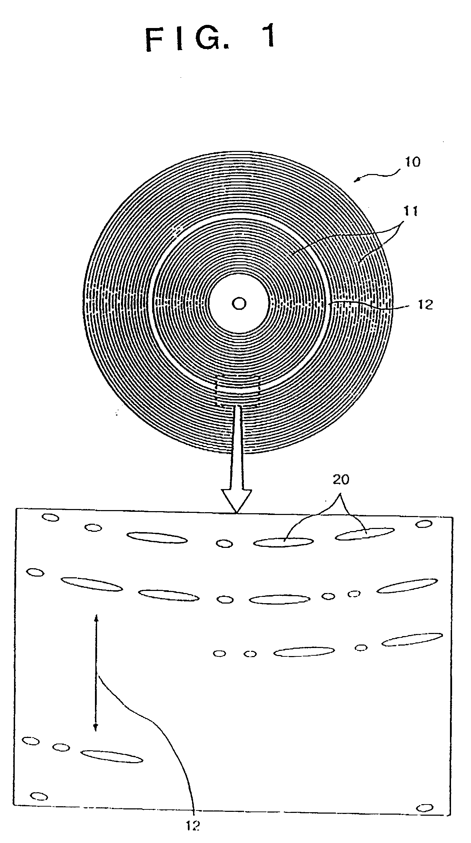

Fig. 1 is a schematic diagram illustrating an example of the construction of the optical disk according to the present embodiment.

In the present embodiment, as shown in Fig. 1, the optical disk 10 has an information recording area including a normal recording area 11 and a non-signal area 12 according to the present embodiment. Although tracks in the recording area 11 and the non-signal area 12 are illustrated in the form of concentric circles, the tracks of a practical disk such as a compact disk are formed in a spiral shape, and the non-signal area 12 may be a part of a spiral or may be formed in a plurality of areas. Non-signal areas may also be formed in a manner which cannot be represented in a simple fashion as in Fig. 1 but in which they are scattered over the entire recording area.

In Fig. 1, a part of the non-signal area 12 is shown in an enlarged fashion. As can be seen, no pits, as the pits 20, are formed along a spiral track in the non-signal area 12.

The length of the non-signal area 12 should be so large that pickups of optical disk drives of practically used types cannot trace the track and thus a "not ready" state results. More specifically, in the case of a compact disk, it is required that the length of the non-signal area 12 be equal to or greater than a value corresponding to one block = 1/75 sec. The length of the non-signal area 12 may be greater than a predetermined value so that users can visually see the non-signal area 12 which protects the optical disk 10 from illegal use. It has been found experimentally that a visual circular shape can be obtained when the length of the non-signal area 12 corresponds to 3 sec.

### Example of a Process of Producing an Optical Disk According to the Present Embodiment

The non-signal area 12 may be produced in various fashions depending on the type of an optical disk. An example of a process of producing the non-signal area is described below for a case in which a read-only compact disk is employed as the optical disk.

The process of producing a read-only compact disk includes the following two main steps. The first step is to produce a mother stamper. The second step is to produce a great number of optical disks for actual use using the mother stamper. The non-signal area 12 according to the present embodiment is formed on the mother stamper in the first step, and it is duplicated on optical disks in the second step. More specifically, a photosensitive material is coated on a circular glass plate which has been polished and cleaned. The photosensitive material is then exposed to a laser beam. In this exposure process, the laser beam is shut off during a predetermined period starting from a predetermined time using a light shut-off mechanism disposed in an optical path of the laser beam so that a particular continuous area is not exposed to the laser beam thereby forming a non-signal area 12 such as that shown in Fig. 1.

In the present example of the production process, the optical disk is assumed to be of the read-only type. However, the production process may also be employed to form a non-signal area 12 on a write-once optical disk or a rewritable optical disk. In this case, the non-signal area 12 causes a recording error unless recording is performed taking into account the presence of the non-signal area 12 at a particular location, and thus illegal use such as copying can be prevented.

### An Example of an Apparatus for Producing an Optical Disk According to the Present Embodiment

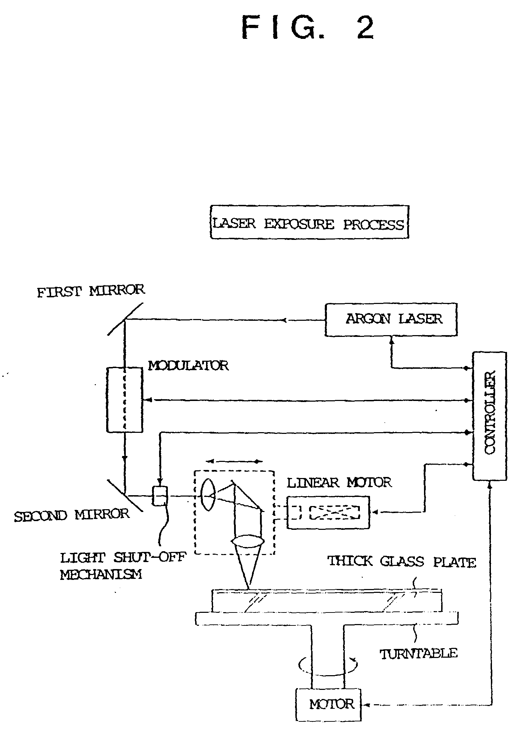

Fig. 2 is a schematic diagram illustrating an example of the construction of an apparatus for producing a mother stamper with illegal use protection according to the present embodiment.

In Fig. 2, a thick glass plate, one surface of which is coated with a photosensitive material, is placed on a turntable. A laser beam is emitted from an argon laser device and modulated by a modulator in accordance with data to be written on the optical disk. The modulated laser beam is focused by an optical lens system onto the photosensitive material. Thus, the photosensitive material is exposed while the thick glass plate is rotated at a high speed. During this exposure process, the optical lens system is moved by a linear motor in a radial direction of the thick glass plate starting from an inner location toward an outer location so that a track is formed in a spiral shape.

A controller controls the argon laser device, the turntable, the modulator, and the linear motor. In the present embodiment, the controller also controls an exposure shut-off mechanism disposed on the optical axis between the optical lens system and a second mirror such that the laser beam is shut off during a predetermined period starting from a predetermined time thereby shutting off exposure so as to produce the non-signal area 12.

The shutting-off of exposure may be accomplished either by means of hardware means such as a shutter or by controlling a polarizer using software. Although in the present embodiment the exposure shut-off mechanism is disposed between the second mirror and the optical lens system, it may be disposed at any location in the optical path of the laser beam as long as the location allows the laser beam to be shut off. Alternatively, instead of using the exposure shut-off mechanism, the non-signal area 12 may be produced by controlling the modulator so that the non-signal area 12 is exposed to a constant intensity of light without being modulated.

### Example of Protection of an Optical Disk from Illegal Use According to the Present Embodiment

If it is attempted to copy data from an optical disk according to the present embodiment to another optical disk, data is successively read from the source optical disk starting from the first sector of the first track and written on the destination optical disk. However, if a non-signal area in which there is no tracking pit signal or continuous groove signal is provided at a particular location in the inside of a file area in which information is recorded or at a particular location between file areas, in accordance with the present embodiment, then a tracking error occurs at the non-signal area and it becomes impossible to trace the track after the non-signal area, and thus it becomes impossible to copy data.

On the other hand, in a normal reproducing operation, even if a non-signal area in which there is no tracking pit signal or continuous groove signal, is provided at a particular location in the inside of a file area in which information is recorded or at a particular location between file areas, the non-signal area does not cause a problem because the non-signal area is skipped in accordance with information such as time data or track and sector data recorded in a particular directory (in the form of a TOC) or in a predetermined program so as to indicate the start and end points of the non-signal area. If desired, areas before and after the non-signal area may be used to record continuous information using addresses.

Furthermore, in the optical disk according to the present embodiment, the location (address) of the non-signal area may be represented by a key number assigned to an authorized user so that the location of the non-signal area is disclosed only to the authorized user thereby preventing the optical disk from being used by an unauthorized user who does not know the key number.

The present invention has been described above with reference to one specific embodiment. However, the essential aspect of the present invention is in that a non-signal area is formed on an optical disk, and the method of producing the non-signal area and the form of the non-signal area not limited to those disclosed in the above embodiment.

As described above, the present invention provides the method protecting an optical disk from illegal use, an optical disk realized using this illegal use protection method, and the method of producing such an optical disk, which can be practiced in a simple manner without requiring a modification of the hardware construction of a drive on which the optical disk is set or a modification of a software program of a computer system connected to the drive.

That is, the optical disk according to the present invention can be dealt with in a reproducing operation in the same manner as conventional optical disks, while ensuring that when it is attempted to copy all data from the optical disk to another optical disk, the copying is prevented by a tracking error.

The production method according to the present invention can be easily practiced simply by disposing a light shut-off mechanism at a particular location in the optical path of a laser beam in a laser exposure apparatus used to produce a mother stamper whereby the laser beams is turned on and off in accordance with the time data or track and sector data described above. This makes it possible to achieve protection against illegal use of optical disks at very low cost.

Although the present invention has been described with reference to the preferred embodiments, the present invention is not limited to those embodiments. Various modifications, changes, and additions are possible without departing from the scope of the invention as described in the appended Claims.

## Claims

1. An optical disk including a non-signal area remaining without being processed in a selected information recording area.

2. An optical disk according to Claim 1, wherein said selected information recording area is registered as a dummy recording area which is not used.

3. An optical disk according to Claim 1, wherein said non-signal area includes a non-signal plane along an information recording track over at least a length long enough to makes it impossible for an optical pickup to trace the information recording track.

4. A method of producing an optical disk comprising the steps of: when information is recorded on the optical disk selecting, at least one information recording area; and leaving a non-signal area without being processed in said selected information recording area.

5. A method of producing an optical disk, according to Claim 4, wherein said selected information recording area is registered as a dummy recording area which is not used.

6. A method of producing an optical disk, according to Claim 4, wherein said non-signal area includes a non-signal plane along an information recording track over at least a length long enough to makes it impossible for an optical pickup to trace the information recording track.

7. A method of producing an optical disk according to Claim 4, wherein said optical disk is of a read-only type, and said method comprises the steps of:
producing data to be written in which at least one non-signal area is selected and said non-signal area is registered as a dummy recording area which is not used; and
maintaining exposure in an on-state or off-state over the entire period corresponding to said at least one non-signal area selected, in a process of producing a mother stamper.

8. A method of producing an optical disk according to Claim 4, wherein said optical disk is of a write-once type or rewritable type, and said method comprises the step of writing a directory such that at least one non-signal area is selected and said non-signal area is registered as a dummy recording area which is not used.

9. An apparatus for producing a mother stamper used to produce an optical disk including at least one non-signal area in an information recording area, said apparatus comprising:
location inputting means for inputting the location of said at least one non-signal area in the information recording area;
exposure means for turning on and off exposure; and
exposure control means for controlling said exposure means such that exposure is maintained in an off-state over a period corresponding to said at least one non-signal area.

10. A method of protecting an optical disk from illegal use, comprising the steps of:
leaving a non-signal area without being processed in a selected information recording area on said optical disk; and
when an optical disk drive reads said non-signal area in the selected information recording area, making said optical disk drive come into a non-ready state.

11. A method of protecting an optical disk from illegal use, according to Claim 10, wherein said selected information recording area is registered as a dummy recording area which is not used, and the non-signal area in said selected information recording area is not read in a normal operation.

12. A method of protecting an optical disk from illegal use, according to Claim 10, wherein:
information on the location of said selected information recording area is disclosed only to an authorized user of said optical disk; and
said selected information recording area is skipped when said authorized user uses said optical disk.
